# EUROPÄISCHE PATENTSCHRIFT

(11) **EP 2 434 166 B1**
(45) Veröffentlichungstag und Bekanntmachung des Hinweises auf die Patenterteilung: **04.11.2015**
(21) Anmeldenummer: 11007375.6
(22) Anmeldetag: 09.09.2011
(51) Int. Cl.: F16B 2/06, F16B 2/14

(54) **Trägerklammer aus Blech**
Sheet metal girder clamp
Pince de support en tôle

(30) Priorität: 22.09.2010 DE 102010045961
(43) Veröffentlichungstag der Anmeldung: 28.03.2012
(73) Patentinhaber: Kober, Edgar, 45888 Gelsenkirchen (DE); Fahrner, Frank, 72290 Lossburg (DE)
(72) Erfinder: Kober, Edgar, 45888 Gelsenkirchen (DE); Fahrner, Frank, 72290 Lossburg (DE)
(74) Vertreter: Lenzing, Andreas

(56) Entgegenhaltungen:
- WO-A1-93/15285
- DE-A1- 19 748 871
- US-A- 1 794 976
- US-A- 4 133 085
- US-A- 4 570 885

## Beschreibung

Die vorliegende Erfindung betrifft eine Trägerklammer und ein Herstellungsverfahren für eine Trägerklammer.

Trägerklammern werden seit langem und in großer Stückzahl als Befestigungsmittel vor allem in der Bauindustrie eingesetzt. Sie werden üblicherweise an Träger, insbesondere Stahlträger, mit einem Profil und/oder einem Flansch geklammert.

Trägerklammern dienen etwa zur Befestigung von Rohren und Leitungen und insbesondere von Sprinkleranlagen an Trägern. Vorteilhaft ist dabei, dass eine tragfähige Befestigung ohne Schweißen oder Bohren erfolgen kann; es ist sogar ein nachträgliches Ausrichten möglich.

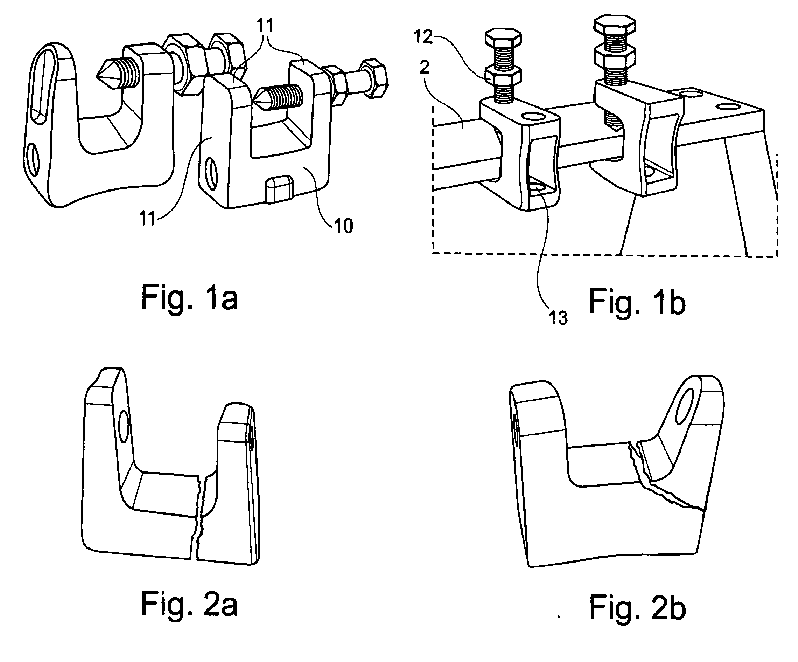

Die Figuren 1a und 1b zeigen konventionelle Trägerklammern. Zwei Enden 11 sind über einen Rücken 10 einstückig miteinander verbunden. Wie in Figur 1b zu erkennen ist, können die Enden 11 einer Trägerklammer einen Träger 2 umfassen. Zur Befestigung der Trägerklammer an dem Träger 2 ist eine eines der Enden 11 durchdringende Verschraubung 12 bzw. Stellschraube 12 vorgesehen. Bei den in Figur 1 gezeigten Trägerklammern weist der Rücken eine Bohrung 13 oder ein Gewinde 13 zur Aufnahme etwa eines Gewindestabes oder eines Gewindeankers (hier nicht gezeigt) auf. So können die zu befestigenden Gegenstände aufgehängt werden.

Aus der US 4,570,885 A ist eine aus Flachstahl gefertigte Trägerklammer zum anschrauben bekannt. Die DE 197 48 871 A1 offenbart eine Trägerklammer die mit einer Klemmschraube an einem Träger befestigt wird. Aus der WO 93/15285 A1 ist eine Stahlankervorrichtung mit einem Keil als Fixiermittel bekannt. Der Keil verklemmt sich zwischen einer Seite der Vorrichtung und dem Träger. Dazu wird der Keil durch einen Schlitz der Vorrichtung geschlagen. Die Stahlankervorrichtung ist nicht für das Abhängen von Lasten vorgesehen. Aus der US 4,133,085 A ist weiterhin eine Verbindungsklammer bekannt, die einen Träger über vier Seiten umfasst und ein Fixiermittel in Form eines Keils aufweist. Der Keil verklemmt sich an einer Seite zwischen dem Träger und der Verbindungsklammer. Dazu weist der Keil eine Bohrung mit Gewinde auf, die von einer Schraube durchsetzt wird. Diese Verbindungsklammer ist für ein Kastenprofil mit einer festen Abmessung bestimmt. Es wird das ganze Profil eingeschlossen, so dass der Einsatz an Profilträgern unmöglich ist.

Trägerklammern sind konventionell aus Temperguss gefertigt. Temperguss hat im Vergleich zu normalem Gusseisen bessere mechanische Eigenschaften und ist besonders zäh, kann dabei aber vergleichsweise gut bearbeitet werden.

Die Erfindung basiert unter anderem auf der Feststellung, dass Temperguss als Material für Trägerklammern Nachteile hat. So ist etwa die Anzahl der Hersteller für Trägerklammern aus Temperguss sehr beschränkt. Fällt ein Hersteller aus, so ist eine hinreichende Versorgung mit Trägerklammern nicht mehr sicher gewährleistet.

Weiter gibt es auch Nachteile, die unmittelbar dem Temperguss zuzuschreiben sind. Die Figur 2a zeigt, wo sich der schwächste Querschnitt einer konventionellen Trägerklammer befindet und wo diese bei Überlastung normalerweise bricht. Die Duktilität des Werkstoffes ist begrenzt. Die Figur 2a zeigt, dass vor dem Bruch kaum eine Verformung stattgefunden hat. Bei Überlastung einer konventionellen Trägerklammer kann es zu einem Spontanbruch kommen. Eine Überlastung einer konventionellen Trägerklammer ist schon während der Montage mit einem Schraubenschlüssel möglich. Daher sollten Drehmomentschlüssel eingesetzt werden. Da jedoch die üblicherweise über Kopf stattfindende Montage an sich schon recht anspruchsvoll ist, wird oft auf den Einsatz eines Drehmomentschlüssels verzichtet. Die Vorspannung ist damit allein dem Gefühl des Monteurs überlassen.

Eine weitere Schwachstelle des Werkstoffes ist die Prozesssicherheit beim Gießen. Es treten immer wieder Lunker in den Werkstücken auf, die früher oder später zum Bruch führen. Von außen sind solche Fehlstellen nur zu erkennen, wenn sie bis zur Oberfläche durchdringen. Die Figur 2b zeigt eine konventionelle Trägerklammer, die wegen Lunkerbildung bei einer Prüfung zu Bruch ging. Problematisch sind auch Faulbrüche, welche ebenfalls auf Gießfehler zurückzuführen sind. Lunker und Faulbrüche werden oft nicht erkannt, wie Proben ergeben haben.

Nachteilig wirken sich bei den gegossenen Trägerklammern auch die verschiedenen Gussschrägen aus. Sie sind für das Gießen notwendig, können jedoch verhindern, dass die Verschraubung, etwa die zugehörigen Muttern, eben an der Trägerklammer und/oder die Trägerklammer eben an dem Träger anliegen.

Hinzu kommt, dass Temperguss verhältnismäßig teuer ist und auch noch mechanisch bearbeitet werden muss, was die Herstellung weiter verteuert. So sind üblicherweise verschiedene Bohrungen einzubringen und ein Gewinde zu schneiden.

Aufgabe der Erfindung ist es, eine besonders kostengünstige und mechanisch besonders vorteilhafte Lehre betreffend Trägerklammern anzugeben.

Der Erfindung liegt die Idee zu Grunde, den Temperguss der konventionellen Trägerklammern durch Blech zu ersetzen. Blech kann in großen Mengen kostengünstig als Walzfertigprodukt aus Metall hergestellt werden und wird von unterschiedlichsten Herstellern bereitgestellt; üblicherweise als Tafel oder als Band.

Die Aufgabe wird gelöst durch eine Trägerklammer zum Klammern an einen Träger mit einem von einem Rücken abragenden ersten Ende zur Anlage an den Träger und einem von dem Rücken abragenden zweiten Ende und mit einem Fixierungsmittel zur Fixierung der Trägerklammer an dem Träger, wobei das Fixierungsmittel eine Keil und ein an dem zweiten Ende angeordnetes rinnenförmiges Widerlager zur Aufnahme des Keils aufweist und dass die Enden und der Rücken mit Blech ausgebildet sind. Vorzugsweise sind der Rücken und das Ende einstückig ausgebildet.

Die erfindungsgemäßen Trägerklammern sollen gattungsgemäß zum Klammern an einen Träger geeignet sein, so dass über so eine Trägerklammer eine Nutzlast, etwa ein Teil einer Sprinkleranlage, an dem Träger befestigt werden kann.

Bei den Trägern kann es sich um konventionelle Träger handeln, insbesondere typische und weitverbreitete Bauträger oder Stahlträger, die ein Profil, einen Flansch oder - allgemein - einen Vorsprung oder auch Abragung aufweisen, an die die Trägerklammer geklammert werden kann. Bei einigen Trägern, insbesondere bei Trägern mit geringem Durchmesser, etwa bei Brettern, ist auch ein Klammern an dem gegebenenfalls abragungsfreien Träger selbst möglich. Der sprachlichen Einfachheit halber wird daher darauf abgestellt, dass der Träger geklammert wird beziehungsweise die Trägerklammer an dem Träger fixiert wird und nicht notwendig der gegebenenfalls genutzte Vorsprung erwähnt.

Die Trägerklammer liegt mit dem von dem Rücken abragenden Ende an dem Träger an und ist mit Hilfe des Keils an dem Träger fixiert.

Bei angeklammerter Trägerklammer steht der Rücken vorzugsweise seitlich von dem Träger ab. Zur Aufnahme einer Verankerung, insbesondere eines Gewindestabes oder eines Gewindeankers, kann etwa eine Bohrung oder ein Gewinde an oder in dem Rücken vorgesehen sein.

Der geklammerte Träger liegt zwischen dem anliegenden Ende und dem Fixierungsmittel. Er wird dabei zwischen diesem Ende und dem Fixierungsmittel eingeklemmt. In anderen Worten: Der Träger wird durch das an dem Träger anliegende Ende und das Fixierungsmittel gegriffen.

Im Gegensatz zu Temperguss bricht Blech nicht abrupt, sondern lässt eine deutliche Verformung zu. Lunker und andere Gießfehler können bei einer Herstellung aus Blech nicht auftreten.

Blech ist leicht zu verarbeiten und günstig von unterschiedlichsten Herstellern beziehbar. Die Versorgung mit erfindungsgemäßen Trägerklammern ist daher sicherer gewährleistet.

Blech ist leicht, hat günstige mechanische Eigenschaften und kann durch geeignete Wahl der Stärke, Geometrie und des Materials an unterschiedlichste Anforderungen angepasst werden. Zum Beispiel kann bei besonders starker geplanter Belastung ein hinreichend starkes Blech aus Edelstahl gewählt werden. Unabhängig davon ist eine bevorzugte Wahl auch verzinktes Stahlblech. Über eine Anpassung der Geometrie werden vielfältige Spannmöglichkeiten eröffnet. Bisher wurden für Flanschdicken bis 25 mm Trägerklammern mit drei festen Größen eingesetzt. Die Eigenschaften der erfindungsgemäßen Trägerklammern ermöglichen eine größere Auswahl unterschiedlicher Ausgestaltungen oder auch eine aufgabenspezifische Herstellung oder Anpassung.

Proben haben eine hinreichende mechanische Zuverlässigkeit ergeben.

Vorzugsweise wird für die Erfindung die konventionelle Ausgestaltung mit zwei über einen Rücken miteinander verbundenen Enden zum Umfassen des Trägers beibehalten. Besonders bevorzugt sind der Rücken und beide Enden einstückig ausgebildet.

Auch wenn die Trägerklammer über zwei Enden verfügt, wird üblicherweise nur eines der beiden Enden an dem Träger anliegen und der Träger gegenüberliegend über das Fixierungsmittel der Trägerklammer fixiert.

Weist die Trägerklammer zwei von dem Rücken abragende Enden auf, so liegen sich diese Enden voneinander beabstandet gegenüber; vorzugsweise - jedoch nicht zwingend - liegen beide Enden in der gleichen Ebene. Die beiden einander gegenüberliegenden Seiten der Enden bestimmen die maximale Spanne mit der geklammert werden kann. Der sprachlichen Einfachheit halber wird hier von den Innenseiten der Enden gesprochen. Zumindest eine der beiden Innenseiten ist dabei zur Anlage an den Träger geeignet. Bei bevorzugten Ausführungsformen sind die Innenseiten beider Enden zur Anlage an den Träger ausgelegt (s.u.). Beim Klammern greifen die Enden der Trägerklammer mit ihren Innenseiten um den Träger beziehungsweise um den Vorsprung herum und fassen diesen zweiseitig ein.

Bei einer bevorzugten Ausführungsform der Erfindung sind der Rücken und das Ende oder die Enden aus vorgestanztem Blech gefertigt. Die Trägerklammer muss dann nur noch in ihre endgültige Form umgeformt werden; etwa durch Biegen.

Vorzugsweise hat der Rücken eine U-Form. Diese Form ist mechanisch besonders stabil und lässt sich durch Biegen des Blechs leicht fertigen. Dabei ist es bevorzugt, wenn das Ende oder die Enden jeweils als Verlängerung der Schenkel der U-Form des Rückens ausgebildet ist oder sind. Jedes Ende kann dann zwei nebeneinander liegende Streben haben, welche von dem Rücken abragen. Bei gegriffenem Träger sind die die Enden konstituierenden Schenkel des U dem Träger zugewandt und die die Schenkel verbindende Basis des U dem Träger abgewandt.

Es ist bevorzugt, die Innenseiten der Enden jeweils mit einer Verzahnung zu versehen. Dies erlaubt eine sichere Anlage. Bei zwei Enden kann die Anlage entweder mit der Innenseite des einen Endes oder mit der Innenseite der anderen Endes erfolgen; gegebenenfalls sogar mit beiden Innenseiten. Ist ein Ende mit zwei nebeneinander verlaufenden Streben ausgebildet, so ist es bevorzugt, jede Strebe innenseitig mit einer Verzahnung zu versehen.

Die Befestigung von Trägerklammern mit Stellschrauben kann insbesondere mit Blick auf die Handhabung problematisch sein. Wird etwa eine konventionelle Trägerklammer mittels einer Stellschraube an einem Träger befestigt, bildet der Druckpunkt der Schraube auf dem Träger einen Drehpunkt. Beim Anziehen der Schraube überträgt sich die Drehung auf die Trägerklammer und diese verdreht sich. Dies erschwert die gerade und einwandfreie Befestigung der Trägerklammer; dabei ist die Überkopfarbeit ohnehin schon schwierig und anspruchsvoll.

Daher liegt, wie oben bereits beschrieben, der Erfindung die Idee zu Grunde, die konventionelle Verschraubung durch eine Verkeilung, also eine Verbindung mit einem Keil, zu ersetzen. Keilverbindungen sind aus anderen technischen Gebieten grundsätzlich bekannt. Im Gerüstbau sind sie als dynamische und hochbelastbare Verbindungen bekannt.

Die Verschraubung, also insbesondere die Stellschraube, das entsprechende Gewinde und eine üblicherweise eingesetzte Kontermutter können entfallen.

Die erfindungsgemäße Trägerklammer hat einen Keil und ein Widerlager für den Keil. Das Widerlager ist relativ zu dem Rückens der Trägerklammer unbeweglich und dient zur Anlage des Keils.

Zur Fixierung der Trägerklammer wird das Ende oder eines der Enden an dem Träger angelegt und der Keil zwischen das Widerlager und den Träger getrieben.

So wird der Träger fest mit bzw. zwischen dem anliegendem Ende der Trägerklammer und dem Keil gegriffen. In anderen Worten: Der Träger wird zwischen dem anliegenden Ende der Trägerklammer und dem Keil eingeklemmt.

Der Keil kann beim Einklemmen an dem Widerlager entlanggleiten.

Der Keil kann einfach durch Anschlagen zwischen Widerlager und Träger getrieben werden. Dabei wird er vorzugsweise an dem Rücken vorbei geführt.

Die Verwendung eines Keils zur Befestigung erleichtert insbesondere die anspruchsvolle Überkopfarbeit. Es muss nicht mehr auf ein korrektes Drehmoment geachtet werden und die Trägerklammer verdreht sich nicht mehr beim Fixieren. Ein leichtes Anschlagen des Keils genügt.

Vorzugsweise verläuft das Widerlager entlang des Endes der Trägerklammer. Sind zwei Enden vorhanden, so ist es bevorzugt, wenn beide Enden über ein Widerlager verfügen. Die Trägerklammer ist so besonders flexibel einsetzbar.

Es ist vorteilhaft, wenn das oder die Widerlager einstückig mit dem jeweiligen Ende ausgebildet sind. Beispielsweise kann ein Widerlager durch Herausbiegen eines Abschnitts eines Endes aus der Ebene des Endes und des Rückens gebildet werden; die Biegung erfolgt dabei also quer zur Längsrichtung des entsprechenden Endes nach außen. Dabei kann besonders leicht ein rinnenförmiges Widerlager ausgebildet werden, was bevorzugt ist.

Bei einer besonders bevorzugten Ausführungsform ist der Keil ein Doppelkeil. Dazu kann er u-förmig ausgebildet sein. Die Schenkel des U haben jeweils Keilform und können etwa auf zwei beabstandeten beidseits des Rückens gelegenen Widerlagern der Trägerklammer angelegt werden. Die beiden Keile sind an ihrem dickeren Ende miteinander verbunden. Vorzugsweise wird der Doppelkeil mit einer Trägerklammer mit u-förmigem Rücken eingesetzt. Dabei ist es bevorzugt, wenn die U-Form des Doppelkeils die U-Form des Rückens einfasst.

Die Kraft entfaltet sich beim Doppelkeil bei der Herstellung der Verkeilung besonders symmetrisch, was die Handhabung weiter verbessert.

Vorzugsweise wird der Keil so ausgelegt, dass er sich nicht von der Trägerklammer lösen beziehungsweise von ihr abfallen kann. Beim Doppelkeil kann etwa eines der verjüngten Enden eine gebogene Lasche aufweisen, die beim Abfallen hängen bleibt.

Es ist bevorzugt, wenn der Keil beziehungsweise der Doppelkeil aus Blech besteht.

Die Erfindung betrifft auch ein Verfahren zur Herstellung einer Trägerklammer zum Klammern an einen Träger mit den Schritten:
Umformen eines Blechs zur Ausbildung von einem Rücken und einem von dem Rücken abragenden Ende zur Anlage an den Träger und Ausstatten der Trägerklammer mit einem rinnenförmigen Widerlager zur Aufnahme eines Keils zur Fixierung der Trägerklammer an dem Träger.

Soll eine Trägerklammer mit zwei Enden hergestellt werden, so wird vorzugsweise ein Blech zur Ausbildung von zwei über einen Rücken miteinander verbundenen Enden zum Einfassen eines Abschnitts des Trägers umgeformt.

Vorzugsweise wird das Blech vorgestanzt. Bevorzugt ist es auch, wenn das Blech durch Biegen in Form gebracht wird und der Rücken und das Ende oder die Enden einstückig ausgebildet werden.

Die Erfindung betrifft insbesondere die Verwendung von Blech zur Herstellung einer Trägerklammer.

Grundsätzlich betrifft die Erfindung auch ein System mit einer Trägerklammer, insbesondere mit einer erfindungsgemäßen Trägerklammer, und einem Keil.

Die in der vorangehenden und folgenden Beschreibung offenbarten Aspekte beziehen sich sowohl auf die Trägerklammer als auch auf das Herstellungsverfahren und auf die Verwendungen beziehungsweise auf das System, auch wenn dies nicht immer ausdrücklich ausformuliert ist. Die einzelnen Merkmale können dabei auch in anderen als den gezeigten Kombinationen erfindungswesentlich sein.

Im Folgenden soll die Erfindung auch anhand von Ausführungsbeispielen näher erläutert werden, ohne dabei die Erfindung durch die Beispiele einschränken zu wollen.

Es zeigen:
- Figuren 1a und 1b:: konventionelle Trägerklammern;
- Figuren 2a und 2b:: gebrochene konventionelle Trägerklammern;
- Figur 3:: eine schematische Darstellung einer konventionellen Trägerklammer mit Verschraubung in drei Ansichten;
- Figur 4:: eine Ausgestaltungen der Trägerklammer aus Figur 3;
- Figur 5:: eine erfindungsgemäße Trägerklammer mit Verkeilung in zwei Ansichten;
- Figur 6:: eine bevorzugte Ausgestaltung der Trägerklammer aus Figur 5;
- Figur 7:: eine alternative bevorzugte Ausgestaltung der Trägerklammer aus Figur 5;
- Figur 8:: eine perspektivische Darstellung einer erfindungsgemäßen Trägerklammer mit Verkeilung;
- Figur 9:: eine schematische Darstellung einer erfindungsgemäßen Trägerklammer mit Verkeilung beim Klammern an einen Träger;
- Figur 10:: eine schematische Darstellung einer erfindungsgemäßen Trägerklammer mit Verkeilung beim Klammern an einen Träger mit einem Gewindeanker;
- Figur 11:: eine schematische Darstellung eines Doppelkeils;
- Figur 12:: eine schematische Darstellung von drei Ansichten eines Rückens mit zwei abragenden Enden einer erfindungsgemäßen Trägerklammer.

Die Figuren 1 und 2 beziehen sich auf konventionelle Trägerklammern und sind am Beginn dieser Schrift beschrieben.

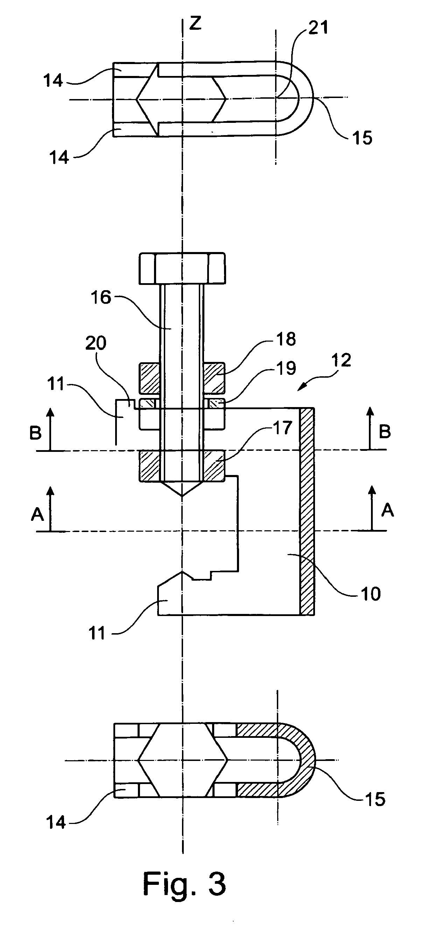

Figur 3 zeigt eine konventionelle Trägerklammer mit einer Verschraubung 12 als Fixierungsmittel.

Der mittlere Teil der Figur zeigt die Trägerklammer von der Seite. Man erkennt den Rücken 10, die Enden 11 und die Verschraubung 12. Pfeile A-A und B-B kennzeichnen entsprechende Schnittebenen. Der untere Teil der Figur zeigt einen Schnitt entlang der A-A Ebene und der obere Teil der Figur zeigt einen Schnitt entlang der B-B Ebene.

Rücken 10 und Enden 11 bestehen aus vorgestanztem Blech und sind in Form gebogen. Die resultierende U-Form ist deutlich in den A-A und B-B Schnitten zu erkennen. Jedes Ende 11 besteht entsprechend aus zwei Schenkeln 14 der U-Form. Der Rücken 10 umfasst die Basis 15 der U-Form, also die Biegung des Blechs.

Der Träger (hier nicht gezeigt) wird mit Hilfe der Verschraubung 12 zwischen den Enden 11 eingeklemmt. Die Verschraubung 12 verfügt über eine Stellschraube 16, ein Gewinde 17, eine Mutter 18 zum Kontern des Systems und eine Unterlegscheibe 19. Die Unterlegscheibe 19 liegt an einem Zapfen 20 an und verhindert, dass die Schraube 16 aus dem Ende 11 rutscht.

Nach der Montage der Trägerklammer an einem Träger bleibt eine Öffnung 21 zwischen Träger, Schenkeln 14 und Basis 15 erhalten. Durch diese Öffnung können Befestigungsmittel, etwa ein Band oder eine Ankerstange, zur Befestigung von aufzuhängenden Gegenständen, etwa einer Sprinkleranlage, geführt werden.

Das Blech der Trägerklammer hat beispielsweise eine Stärke von 2, 3 oder 4mm. Das Zentrum der Stellschraube 12 definiert eine zentrale Achse Z. Der Rücken hat in Z-Richtung eine Länge von 50mm, die Enden sind in Z-Richtung jeweils 10 mm breit. Der Zapfen 20 hat ebenso wie die Unterlegscheibe 19 eine Höhe von 2 mm und das Gewinde 17 hat eine Tiefe von 8 mm. Die Stellschraube hat einen Durchmesser von 10mm. Der Rücken beginnt mit einem Abstand von 13 mm von der Z-Achse. Mit einem Abstand von 22 mm von der Z-Achse beginnt die Biegung des Rückens 10. Das Gewinde 17 hat einen Abstand von 22 mm zu der Innenseite des gegenüberliegenden Endes 11. Die Schenkel 14 der Enden 11 haben einen maximalen Abstand von 11mm. Das unten in der mittleren Figur gezeigte Ende 11 ist um 10 mm kürzer als das obere Ende 11.

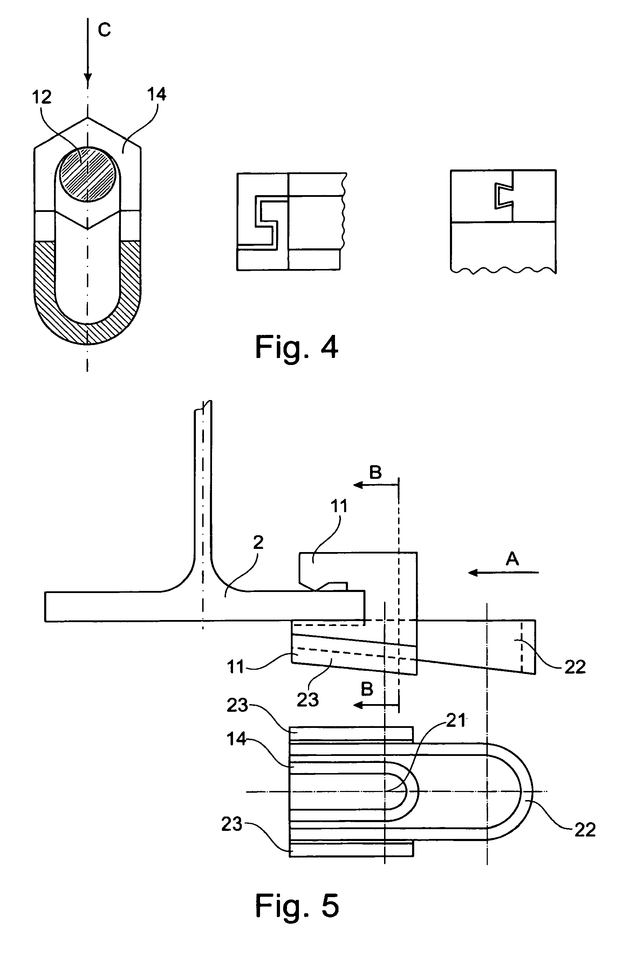

Der linke Teil der Figur 4 zeigt, wie ein Herausfallen der Verschraubung 12 durch ein Umbiegen der Schenkel 14 verhindert werden kann. Der dargestellte Schnitt liegt auf Höhe der Ebene B-B aus Figur 3. Der mittlere und der rechte Teil der Figur 4 zeigen eine Ansicht aus der im linken Teil gekennzeichneten Richtung C. Hier sind die Schenkelenden zusätzlich ineinander verhackt.

Figur 5 zeigt eine erfindungsgemäße Trägerklammer mit Verkeilung in zwei Ansichten. In der oberen Ansicht sieht man die Trägerklammer von der Seite. Man erkennt, wie die Trägerklammer mit einem Doppelkeil 22 an einem T-Träger 2 fixiert ist.

Die untere Ansicht zeigt die Trägerklammer schematisch in Aufsicht. Der untere Teil des unteren Endes 11 ist verrundet rinnenförmig nach außen umgebogen, um ein Widerlager 23 für den Doppelkeil 22 auszubilden. Der Doppelkeil 22 wird beim Einschlagen durch die Rinnen des Widerlagers 23 geführt. Auch hier verbleibt eine Öffnung 21 zur Befestigung einer Nutzlast.

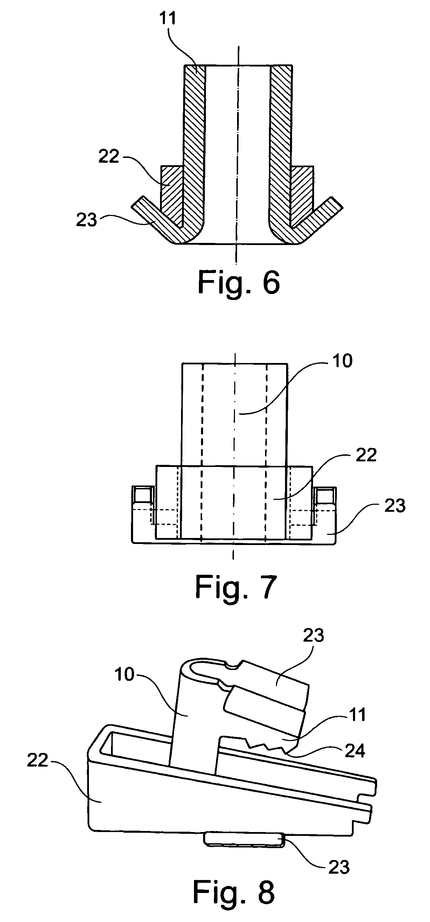

Figur 6 zeigt einen Schnitt durch die in der Figur 5 gekennzeichnete Ebene B-B. Man erkennt, wie der Doppelkeil 22 in dem Widerlager 23 des unteren Endes 11 geführt ist.

Figur 7 zeigt eine alternative Ausgestaltung für das Widerlager 23. Die Ansicht entspricht der in Figur 5 mit A gekennzeichneten Ansicht eines unteren Abschnitts der Trägerklammer. Man blickt auf den Rücken 10, den Doppelkeil 22 und Widerlager 23, dass zwar auch rinnenförmig, jedoch nicht verrundet, sondern nur mit rechten Winkeln ausgebildet ist.

Figur 8 zeigt perspektivisch eine weitere erfindungsgemäße Trägerklammer. Auch sie verfügt über einen Rücken 10, Enden 11 und einen Doppelkeil 22. Hier sind sowohl das obere als auch das untere Ende mit einem Widerlager 23 ausgestattet. Die Innenseiten der Enden 11 weisen jeweils eine Verzahnung 24 auf (unten durch den Doppelkeil 22 verdeckt). Die Innenseiten der Enden 11 der Trägerklammer entsprechen hinreichend langen Anlageflächen, um einen festen Halt zu geben. Die zusätzliche Verzahnung, welche die Oberfläche des Trägers greift, kann ein Verrutschen oder Lösen der Keilverbindung verhindern.

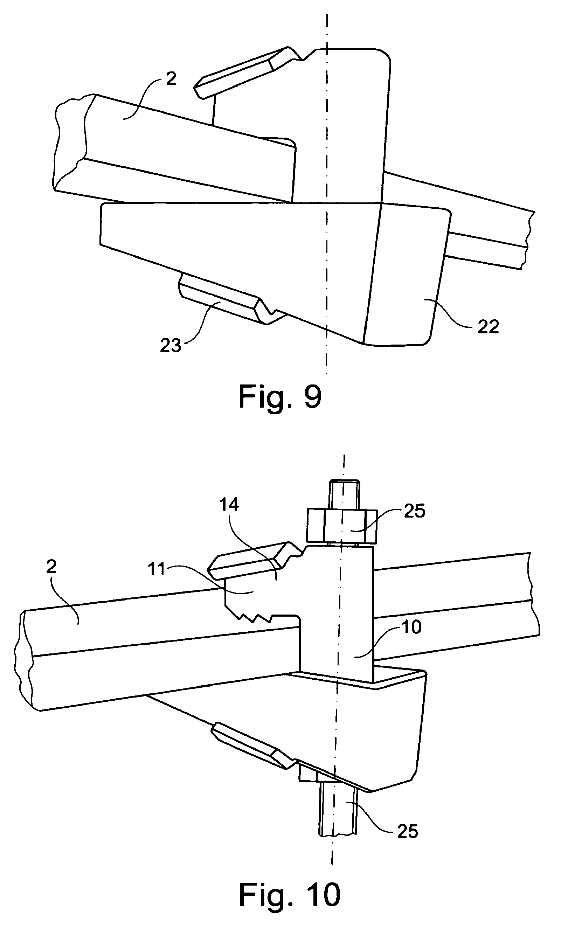

Figur 9 zeigt schematisch, wie eine erfindungsgemäße Trägerklammer mit Verkeilung einen Träger 2 klammert. Dabei wird ein Doppelkeil 22 zwischen ein Widerlager 23 und den Träger 2 getrieben.

Figur 10 zeigt schematisch eine weitere erfindungsgemäße Trägerklammer. Hier ist zwischen den Schenkeln 14, den Enden 11 und dem Träger 2 ein Gewindeanker 25 untergebracht.

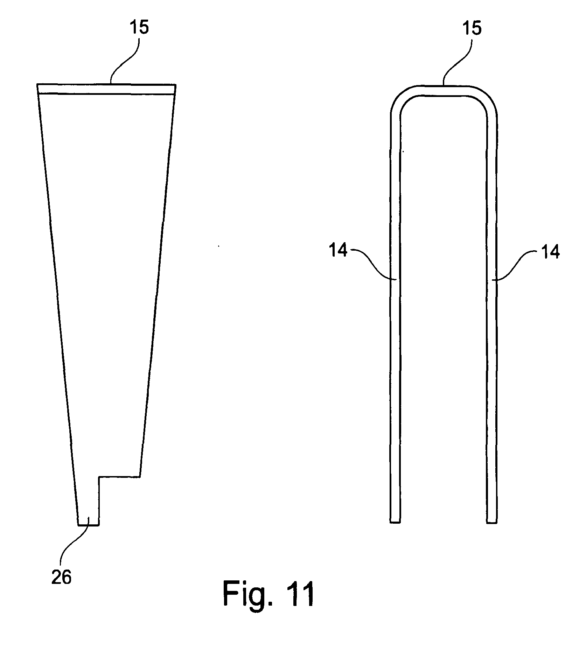

Figur 11 zeigt schematisch einen Doppelkeil. Der rechte Teil der Figur zeigt den Doppelkeil in Aufsicht. Man erkennt hier deutlich die U-Form des Doppelkeils mit den beiden Schenkeln 14 und der Basis 15 des U. Der linke Teil der Figur zeigt den Doppelkeil von der Seite, also einen der Schenkel 14 der U-Form. Man erkennt deutlich die sich verjüngende Keilform. Die Schenkel 14 sind an ihrem dicken Ende über die Basis 15 des U miteinander verbunden. Der Doppelkeil besteht aus Blech, ist vorgestanzt und in die U-Form gebogen.

Im linken Teil der Figur erkennt man am verjüngten Teil des Schenkels 14 eine Lasche 26. Diese wird nach der Montage der Trägerklammer umgebogen und verhindert so, dass der Doppelkeil von der montierten Trägerklammer abfällt.

Der Doppelkeil erhält an seiner Oberseite und an seiner Unterseite eine Skalierung (nicht gezeigt). Alle 5 mm ist eine Kerbung eingebracht. Anhand der Skalierung kann der Monteur beurteilen, wie tief der Keil eingeschlagen ist.

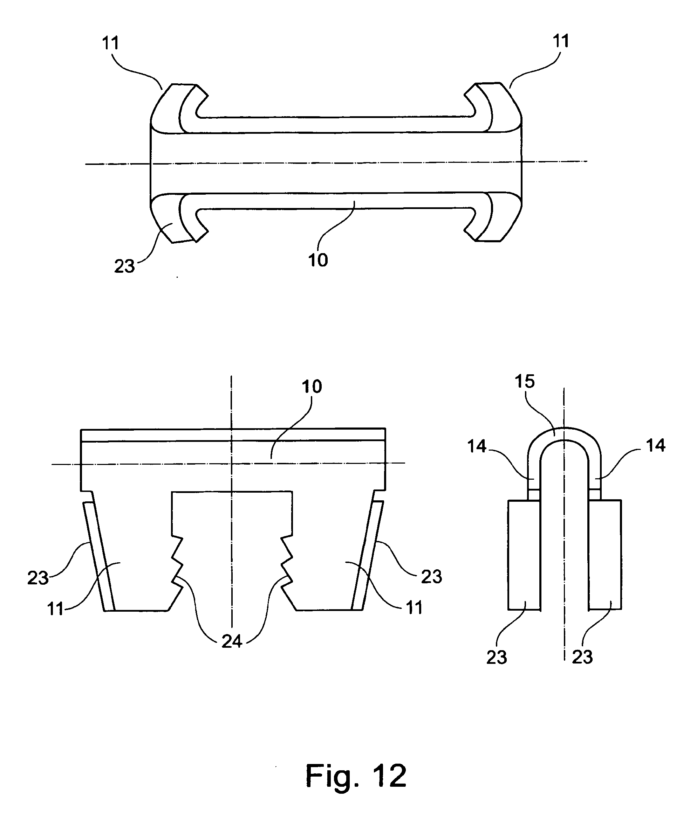

Figur 12 zeigt drei Ansichten eines Rückens 10 mit zwei abragenden Enden 11 einer erfindungsgemäßen Trägerklammer. Links unten ist die Trägerklammer von der Seite gezeigt. Sie verfügt über einen Rücken 10 und zwei Enden 11. Jedes der Enden hat ein Widerlager 23 und eine innenseitige Verzahnung 24. Oben ist die Trägerklammer von "vorne", also mit der dem Träger zuzuwendenden Seite, gezeigt. Man blickt auf die Innenseite des Rückens 10 und auf die Außenseiten der nach vorne aufeinander zulaufenden Widerlager 23. Rechts ist die Trägerklammer in Aufsicht gezeigt. Man erkennt die Basis 15 der U-Form des Rückens 10, die Schenkel 14 der U-Form und die oberen Außenseiten der Widerlager 23.

Durch beidseitige Benutzung der Trägerklammern können diese etwa an Flanschen mit Dicken von 6 bis 22 mm befestigt werden. Von 6 bis 22 mm Flanschdicke wird somit nur eine Type der erfindungsgemäßen Trägerklammer benötigt.

### Bezugszeichenliste

- 2: Träger
- 10: Rücken
- 11: Ende
- 12: Verschraubung/Stellschraube
- 13: Bohrung/Gewinde
- 14: Schenkel
- 15: Basis
- 16: Stellschraube
- 17: Gewinde
- 18: Mutter
- 19: Unterlegscheibe
- 20: Zapfen
- 21: Öffnung
- 22: Doppelkeil
- 23: Widerlager
- 24: Verzahnung
- 25: Gewindeanker
- 26: Lasche
- Z: Achse

## Patentansprüche

1. Trägerklammer zum Klammern an einen Träger (2) mit einem von einem Rücken (10) abragenden ersten Ende (11) zur Anlage an den Träger (2) und einem von dem Rücken abragenden zweiten Ende (11) und mit einem Fixierungsmittel (22, 23) zur Fixierung der Trägerklammer an dem Träger (2), **dadurch gekennzeichnet, dass** das Fixierungsmittel (22, 23) einen Keil (22) und ein an dem zweiten Ende (11) angeordnetes rinnenförmiges Widerlager (23) zur Aufnahme des Keils (22) aufweist und dass die Enden (11) und der Rücken (10) mit Blech ausgebildet sind.

2. Trägerklammer nach Anspruch 1, **dadurch gekennzeichnet, dass** das Blech ein Stanzbiegeteil ist.

3. Trägerklammer nach Anspruch 1 oder 2, **dadurch gekennzeichnet, dass** der Rücken (10) eine U-Form mit zwei angrenzenden Schenkeln (14) aufweist.

4. Trägerklammer nach Anspruch 3, **dadurch gekennzeichnet, dass** die Enden (11) als Verlängerung der Schenkel (14) der U-Form ausgebildet sind.

5. Trägerklammer nach einem der vorhergehenden Ansprüche, **dadurch gekennzeichnet, dass** das erste Ende (11) eine Verzahnung (24) zur Anlage an dem Träger (2) aufweist.

6. Trägerklammer nach einem der vorhergehenden Ansprüche, **dadurch gekennzeichnet, dass** an beiden Enden (11) jeweils ein rinnenförmiges Widerlager (23) für den Keil (22) vorhanden ist.

7. Trägerklammer nach einem der vorhergehenden Ansprüche, **dadurch gekennzeichnet, dass** der Keil (22) ein Doppelkeil (22) mit zwei keilförmigen Schenkeln (14) ist.

8. Verfahren zur Herstellung einer Trägerklammer zum Klammern an einen Träger (2) mit den Schritten:
- Umformen eines Blechs zur Ausbildung von einem Rücken (10) und einem von dem Rücken (10) abragenden Ende (11) zur Anlage an den Träger (2)
- Ausstatten der Trägerklammer mit einem rinnenförmigen Widerlager (23) zur Aufnahme eines Keils (22) zur Fixierung der Trägerklammer an dem Träger (2).

## Claims

1. A beam clamp for clamping onto a beam (2) with a first end (11) projecting from a back (10) to bear against a beam (2) and a second end (11) projecting from the back and fitted with a fixing means (22, 23) to fix the beam clamp to the beam (2), **characterised in that** the fixing means (22, 23) is formed of a wedge (22) and a channel-shaped abutment (23) arranged on the second end (11) in order to receive the wedge (22), and **in that** the ends (11) and the back (10) are formed of sheet metal.

2. Beam clamp according to Claim 1, **characterised in that** the sheet metal is a stamped and bent component.

3. Beam clamp according to Claim 1 or 2, **characterised in that** the back (10) has a U-shape with two adjacent legs (14).

4. Beam clamp according to Claim 3, **characterised in that** the ends (11) form an extension of the legs (14) of the U-shape.

5. Beam clamp according to any of the preceding claims, **characterised in that** the first end (11) has a denticulation (24) to bear against the beam (2).

6. Beam clamp according to any of the preceding claims, **characterised in that** a channel-shaped abutment (23) is provided on on both ends (11) respectively for the wedge (22).

7. Beam clamp according to any of the preceding claims, **characterised in that** the wedge (22) is a double wedge (22) with two wedge-shaped legs (14).

8. Method for manufacturing a beam clamp for clamping onto a beam (2) with the following steps:
- Forming sheet metal to provide a back (10) and an end (11) projecting from the back (10) to bear against the beam (2)
- Providing the beam clamp with a channel-shaped abutment (23) to receive a wedge (22) to fix the beam clamp to the beam (2).

## Revendications

1. Crampon serre-joint pouvant être accroché à un support-porteur (2) avec une première extrémité (11) en saillie à partir d'un dos (10) et destinée à s'appuyer au support-porteur (2) et une deuxième extrémité (11) en saille à partir du dos et avec un moyen de fixation (22, 23) pour la fixation du crampon serre-joint au support-porteur (2), **caractérisé en ce que** le moyen de fixation (22, 23) présente une cale (22) et un élément de contre-appui (23) en forme de rainure agencé au niveau de la deuxième extrémité (11) afin de pouvoir loger la cale (22) et que les extrémités (11) et le dos (10) sont façonnés en tôle.

2. Crampon serre-joint selon la revendication 1, **caractérisé en ce que** la tôle est une pièce obtenue par pliage.

3. Crampon serre-joint selon la revendication 1 ou 2, **caractérisé en ce que** le dos (10) présente une pièce en forme en U avec deux pattes (14) contiguës.

4. Crampon serre-joint selon la revendication 3, **caractérisé en ce que** les extrémités (11) sont formées en tant que prolongement de la patte (14) de la pièce en forme de U.

5. Crampon serre-joint selon une des revendications précédentes, **caractérisé en ce que** la première extrémité (14) présente une denture (24) destinée à s'appuyer au support-porteur (2).

6. Crampon serre-joint selon une des revendications précédentes, **caractérisé en ce qu'**un élément de contre-appui (23) est respectivement disponible pour la cale (22) au niveau des deux extrémités (11).

7. Crampon serre-joint selon une des revendications précédentes, **caractérisé en ce que** la cale (22) est une double cale (22) avec deux pattes en forme de cale (14).

8. Procédé de fabrication d'un crampon serre-joint pouvant être accroché à un support-porteur (2) comprenant les étapes suivantes :
- transformation d'une tôle afin de former un dos (10) et une extrémité (11) étant en saillie à partir du dos (10) et destinée à s'appuyer au support-porteur (2)
- équipement du crampon serre-joint d'un élément de contre-appui (23) en forme de rainure afin de pouvoir loger une cale (22) dans le but de fixer le crampon serre-joint au support-porteur (2).
